**Europäisches Patentamt**

**European Patent Office**

**Office européen des brevets**

(19)

(11) Veröffentlichungsnummer: **0 495 557 A2**

## EUROPÄISCHE PATENTANMELDUNG

(12)

(21) Anmeldenummer: **92200163.1**

(22) Anmeldetag: **14.01.92**

(51) Int. Cl.5: **B29C 65/02**, B31B 19/64

(30) Priorität: **14.01.91 DE 9100385 U**

(43) Veröffentlichungstag der Anmeldung:
**22.07.92 Patentblatt 92/30**

(84) Benannte Vertragsstaaten:
**PT**

(71) Anmelder: **ELWAPLASTIC MASCHINENBAU GMBH**
**Mittelstrasse 2**
**W-5163 Langerwehe(DE)**

(72) Erfinder: **Laumen, Egon**
**Mittelstrasse 2B**
**W-5163 Langerwehe(DE)**

(74) Vertreter: **Glawe, Delfs, Moll & Partner**
**Patentanwälte**
**Liebherrstrasse 20**
**W-8000 München 26(DE)**

(54) **Vorrichtung zum Ouerschweissen einer laufenden Folienbahn.**

(57) Vorrichtung zum Querschweißen einer laufenden Folienbahn mit einer Fördereinrichtung für die Folie und einem in Laufrichtung dahinter/davor vorgesehenen Querschweißwerkzeug, das mit einem Gleichlauffehler im Verhältnis zur Folienbewegung angetrieben ist. Zur Kompensation dieses Gleichlauffehlers ist vorgesehen, daß jeder vom Schweißwerkzeug zurückgelegte Teilweg innerhalb des Schweißwegs geringer/größer als die zugeordnete Folienbewegungsstrecke ist und daß die Folie während dessen hinter/vor der Schweißstelle im wesentlich längsspannungsfrei gehalten ist. Für die zusätzliche Korrektur der Werkzeugbewegung kann vorgesehen sein, daß in deren Antriebszug unrunde Getrieberäder enthalten sind.

EP 0 495 557 A2

Rank Xerox (UK) Business Services

Beim Querschweißen einer Folienbahn müssen Spannungen in der Bahn im Schweißbereich während des Schweißvorgangs und unmittelbar danach vermieden werden, weil anderenfalls das erweichte Material verformt wird und die Folie ggf. abreißt.

Dieses Problem tritt dann nicht auf, wenn sowohl die Folie als auch die Schweißwerkzeuge in bezug auf die Förderrichtung der Folie während des Schweißvorgangs stillstehen (DE-C-3441173; DE-C-3521351). Jedoch ist die Leistung derart taktweise arbeitender Maschinen begrenzt. Bekannt sind daher auch Vorrichtungen, bei denen der Schweißvorgang stattfindet, während die Folienbahn mit konstanter Geschwindigkeit bewegt wird. Dabei ist es erforderlich, das Schweißwerkzeug zumindest während seines Schweißwegs - das ist derjenige Bewegungsabschnitt, in welchem es sich in Schweißkontakt mit der Bahn befindet - geschwindigkeitsgleich mit der Bahn anzutreiben. Dies kann dadurch geschehen, daß das Schweißwerkzeug hin- und hergehend bewegt wird, beispielsweise mittels eines Kurbeltriebs. Da aber ein mittels eines Kurbeltriebs angetriebenes Schweißwerkzeug einen sinusähnlichen Geschwindigkeitsverlauf hat, der beträchtlich von der konstanten Laufgeschwindigkeit der Bahn abweicht, hat man mechanische Korrektureinrichtungen vorgesehen (DE-C 32 34 227; DE-C 37 11 653), die sehr aufwendig und platzraubend sind. - Schließlich ist es bekannt, eine Mehrzahl von Schweißwerkzeugen und Gegenwerkzeugen vorzusehen, die in einer für die Schweißung vorgesehenen Förderstrecke synchron mit der Folie bewegt sind (DE-B 28 09 551; US-A 4 214 509), wobei der Gleichlauf zwischen Folie und Werkzeugen dadurch garantiert wird, daß die Werkzeuge und die zugehörigen Gegenwerkzeuge mit Klemmen für die Folie verbunden sind, die mit einer geringeren Geschwindigkeit angetrieben werden als die Folie zugeführt wird, so daß sie zwischen den einzelnen Werkzeugen durchhängt. Damit wird ein von dem Folienzufuhrförderer unabhängiger Förderer geschaffen, der sowohl zur Förderung der Werkzeuge als auch der Folie dient, wodurch sich zwangsläufig der erstrebte Gleichlauf ergibt. Jedoch ist eine solche Maschine äußerst aufwendig.

Der Erfindung liegt die Aufgabe zugrunde, eine Querschweißvorrichtung der oben an zweiter Stelle genannten Art zu schaffen, bei welcher das Schweißwerkzeug hin- und hergehend angetrieben ist und die Folie auch im Schweißbereich ihrer eigenen Förderung unterliegt, wobei die erläuterten Gleichlaufprobleme auf einfache Weise gelöst werden. Die Erfindung findet die Lösung in den Merkmalen der Ansprüche.

Der tragende Gedanke besteht darin, daß man auf die Perfektionierung des Gleichlaufs verzichtet und statt dessen der Schweißweg des Schweißwerkzeugs gegenüber dem Förderweg der für die Folie vorgeschalteten Fördereinrichtung derart verkürzt wird, daß der Gleichlauffehler des Schweißwerkzeugs lediglich zu einem Zurückbleiben des Schweißwerkzeugs gegenüber dem theoretischen Folienlauf führt, nicht aber zu einem Überholen desselben. Dadurch wird sichergestellt, daß die Folie zwischen dem Schweißwerkzeug und der vorgeschalteten Fördereinrichtung nicht einer Spannung ausgesetzt wird, die zur Beschädigung der noch weichen Querschweißnaht führen könnte. Das Zurückbleiben des Werkzeugs gegenüber der theoretischen Foliengeschwindigkeit führt zu einem geringfügigen, in der Praxis unmaßgeblichen Aufstauen der Folie zwischen dem Schweißwerkzeug und der vorgeschalteten Fördereinrichtung, das in der folgenden Funktionsphase, in welcher das Schweißwerkzeug von der Folie gelöst ist, wieder ausgeglichen wird. Das Zurückbleiben des Schweißwerkzeugs gegenüber der theoretischen Foliengeschwindigkeit darf nicht dazu führen, daß die frische Schweißnaht einer Dehnung zwischen dem Schweißwerkzeug und einem nachfolgenden Förderorgan ausgesetzt wird. Die Erfindung sieht deshalb vor, daß die Folie im Anschluß an das Schweißwerkzeug im wesentlichen spannungsfrei gehalten bzw. vorgeschoben wird. Unter Spannungsfreiheit ist so geringe Spannung zu verstehen, daß die frische Schweißnaht dadurch nicht gefährdet wird. Diesem Erfordernis wird beispielsweise Rechnung getragen durch ein die Folie tragendes Förderband, das mit größerer Geschwindigkeit angetrieben ist als die Folie, wobei diese durch Eigengewichtsreibung oder eine durch minimale Auflast hervorgerufene Reibung mitgenommen wird.

Wenn das Förderorgan, das der Folie eine konstante Geschwindigkeit verleiht, dem Schweißwerkzeug nachgeschaltet ist, läßt man das Schweißwerkzeug gegenüber dem theoretischen Folienlauf voreilen, so daß die Folie zwischen dem Schweißwerkzeug und der Fördereinrichtung ein wenig zusammengeschoben wird, während darauf geachtet wird, daß die Folie hinter dem Schweißwerkzeug keiner möglicherweise schädlichen Spannung ausgesetzt wird.

Selbstverständlich wird man sich bemühen, die Gleichlauffehler so gering wie möglich zu halten. Jedoch hat sich gezeigt, daß die Erfindung selbst dann zum Erfolg führt, wenn die Schweißwerkzeuge durch einen einfachen Kurbeltrieb bewegt sind. Dabei hat es sich als zweckmäßig erwiesen, lediglich einen solchen Bogen des Kurbelumlaufs für den Antrieb innerhalb des Schweißwegs zu benutzen, in welchem die Abweichung des Geschwindigkeitsverlaufs vom linearen Verlauf gering ist. Dieser Bogen ist zweckmäßigerweise kleiner als 120°, weiter vorzugsweise kleiner als 100°. Weiter vorzugsweise liegt er in der Größenordnung von 80°. Dabei ist es im allgemeinen zweckmäßig, den dem Schweißweg des Werkzeugs zugeordneten Bogen des Kurbelumlaufs etwa in der Mitte zwischen zwei Totpunkten anzuordnen. Jedoch kann in manchen Fällen auch eine andere Anordnung zweckmäßig sein.

Es kann vorteilhaft sein, wenn die soeben beschriebene Funktion ergänzt wird durch eine Korrektur der Werkzeugbewegung. Diese Korrektur kann sowohl die Bewegungskomponente quer zur Folienlaufrichtung als auch die parallel zur Folienlaufrichtung betreffen oder auch nur eine der beiden Komponenten. Während im Stand der Technik, wie eingangs ausgeführt, diese Korrektur sehr aufwendig ist, weil sie prinzipiell auf eine Linearisierung hinausläuft, genügen im Zusammenhang mit der Erfindung vergleichsweise einfache Mittel, nämlich die Verwendung unrunder Betrieberäder in dem Getriebe bzw. den Getrieben, die von dem Antrieb der Schweißwerkzeuge zu deren Bewegung parallel bzw. quer zur Folienlaufrichtung führen. Vorzugsweise handelt es sich dabei um elliptische Räder. Diese können zentrisch gelagert sein, woraus sich eine symmetrische Bewegungskorrektur jeweils in beiden Halbumläufen der Kurbel ergibt. Sie können aber auch exzentrisch gelagert sein mit dem Ergebnis, daß während eines vollen Umlaufs nur eine Verlangsamung stattfindet. Auch Zwischenstufen zwischen diesen beiden extremen Möglichkeiten stehen zur Verfügung.

Bei einer bevorzugten Ausführung der Erfindung wird lediglich die Bewegungskomponente der Werkzeuge quer zur Folienbahn mittels unrunder Getrieberäder korrigiert, und zwar in solcher Weise, daß die Werkzeuggeschwindigkeit in demjenigen Bereich vermindert ist, in welchem sich die Werkzeuge in Kontakt mit der Bahn befinden.

Die Geschwindigkeitskorrektur mittels unrunder Getrieberäder und die damit in Zusammenhang stehenden Merkmale verdienen ggf. Schutz unabhängig von den Merkmalen der Ansprüche 1 bis 4.

Die Erfindung wird im folgender näher unter Bezugnahme auf die Zeichnung näher erläutert. Darin zeigen:

Fig. 1    ein Diagramm eines für die Erfindung typischen Bewegungsablaufs,

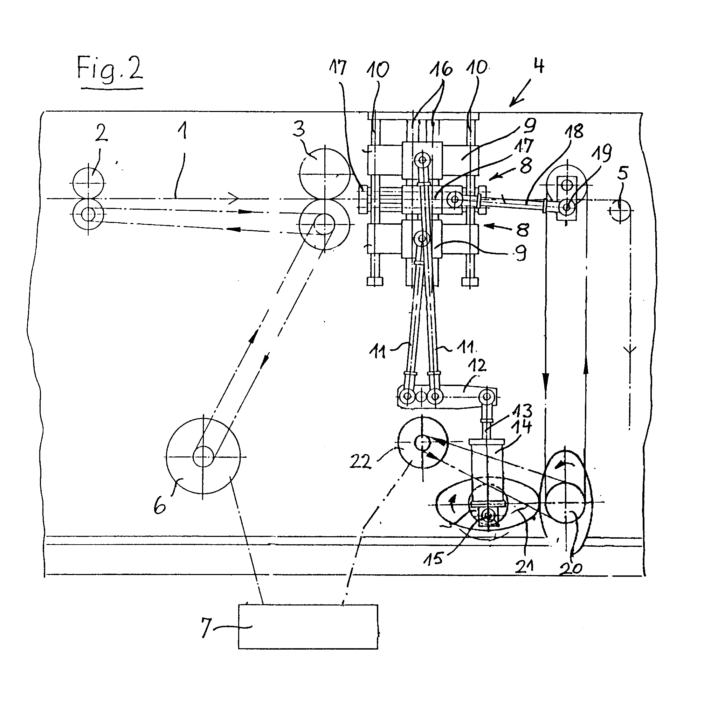

Fig. 2    eine schematische Seitenansicht einer erfindungsgemäßen Maschine zum Querschweißen der Folienbahn.

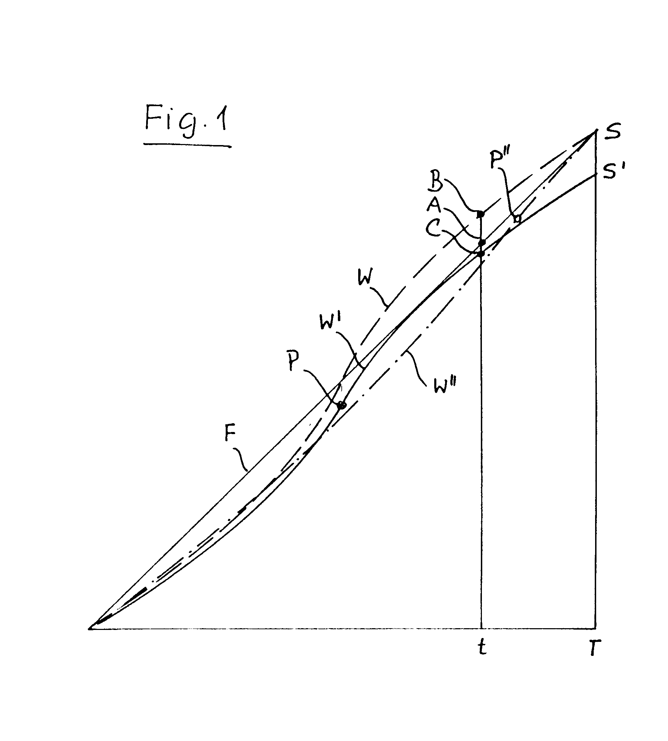

In dem Diagramm Fig. 1 ist über der Zeitachse der Weg aufgetragen, den die Folie und das Schweißwerkzeug in gegenseitigem Kontakt zurücklegen, wobei vorausgesetzt ist, daß die Fördereinrichtung für die Folie dem Schweißwerkzeug vorgeschaltet ist. Die theoretische Foliengeschwindigkeit ist konstant; die theoretische Folienbewegung wird daher von einer Geraden F beschrieben, die in der Zeit T des gegenseitigen Kontakts der Folie und der Schweißwerkzeuge zu dem Weg S führt.

Wenn das Schweißwerkzeug in der Zeit T denselben Weg S zurücklegen würde, würde seine Bewegung durch die Kurve W beschrieben, die durch ihren sinusähnlich bogigen Verlauf die Abweichung von dem geraden Verlauf der theoretischen Folienbewegung (ein wenig übertrieben) deutlich macht. In der ersten Hälfte des Schweißwegs liegt die Kurve W unter der Geraden F. Das bedeutet, daß der Schweißbalken hinter der theoretischen Folienbewegung zurückbleibt. In der zweiten Hälfte des Schweißwegs liegt jedoch die Kurve W oberhalb der Geraden S; dies bedeutet, daß das Werkzeug gegenüber der Folie vorauseilt. Beispielsweise hat im Zeitpunkt t der Schweißpunkt der Folie theoretisch erst den Punkt A erreicht, während das Werkzeug schon im Punkt B ist. Da dies die Folie zwischen dem Schweißwerkzeug und der vorgeschalteten Fördereinrichtung unter hohe Spannung setzen würde, die zur Zerstörung der Schweißnaht führen würde, wird erfindungsgemäß vorgesehen, daß der Schweißweg des Werkzeugs auf den Betrag S' vermindert wird. Die Bewegung des Werkzeugs wird dann durch die Kurve W' beschrieben, die im gesamten Verlauf unterhalb der theoretischen Bewegungsgeraden F der Folie bleibt. Wenn die Folie nach der Zeit T theoretisch im Punkt A angelangt ist, ist das Schweißwerkzeug im Falle seiner korrigierten Bewegungskurve W' erst im Punkt C angekommen. Auf diese Weise wird erreicht, daß jeder Teilweg des Werkzeugs kleiner als (höchstens ebenso groß wie) der zugeordnete Teilweg der Folie ist und daß somit jegliche schädliche Spannung auf der in Bewegungsrichtung hinter dem Schweißwerkzeug liegenden Seite von der Folie ferngehalten wird. Auf der anderen Seite des Schweißwerkzeugs wird eine solche Spannung durch die Art der Fördermittel vermieden.

Entsprechend umgekehrt sind die Verhältnisse, wenn die Fördereinrichung, die der Folie eine konstante Vorschubgeschwindigkeit verleiht, hinter dem Querschweißwerkzeug angeordnet ist. In diesem Fall soll die Bewegungskurve des Werkzeugs oberhalb der Geraden F liegen, so daß die Folie zwischen Werkzeug und Fördereinrichtung eher zusammengeschoben als gespannt wird. In diesem Falle ist dafür zu sorgen, daß die Folie in Laufrichtung hinter dem Schweißwerkzeug längsspannungsfrei ist.

Wenn es erwünscht ist, daß der gesamte Schweißweg des Werkzeugs dem theoretisch entsprechenden Vorschubweg der Folie möglichst nahekommt, kann dies dadurch geschehen, daß derjenige Bogen des Kurbeltriebs, der dem Schweißweg des Werkzeugs zugeordnet ist, so gewählt wird, daß der Geschwindigkeitswendepunkt P, der im Falle der Kurve W' in deren Mitte liegt, mehr oder gänzlich zum einen oder anderen Ende des Schweißwegs geschoben wird, wie Kurve W'' dies bei P'' zeigt.

Die erfindungsgemäßen Merkmale beziehen sich nur auf den Schweißweg. Sie schließen nicht aus, daß außerhalb des Schweißwegs andere Verhältnisse herrschen. Im übrigen schließen sie auch nicht aus, daß die Foliengeschwindigkeit oder die Werkzeuggeschwindigkeit im Schweißweg oder außerhalb desselben elektronisch oder auf andere Weise zusätzlich geregelt wird.

Die strichpunktiert dargestellte Folienbahn 1 wird mittels Förderwalzenpaaren 2, 3 der Schweißstation 4 zugeführt, von der sie durch eine geeignete Fördereinrichtung abgezogen wird, die hier als Rolle 5 angedeutet ist und keine wesentliche Zugspannung auf die Folie überträgt. Die Fördereinrichtungen 2, 3 und 5 werden mittels eines Motors 6 angetrieben, der unter dem Einfluß eines Reglers 7 steht, der dem Antriebsmotor unterschiedliche Antriebsgeschwindigkeiten entsprechend der verlangten Folienfördergeschwindigkeit verleihen kann. In der Regel wird die Folie außerhalb der Schweißperioden mit größerer Geschwindigkeit angetrieben, als während der Schweißperioden, wobei aber die Geschwindigkeit während der Schweißperiode zumindest etwa konstant ist. Jedenfalls wird mittels des Reglers 7 kein vollständiger Gleichlauf zwischen der Folie und den Schweißwerkzeugen erzielt.

Die Schweißstation 4 enthält zwei Schweißwerkzeuge 8 (Schweißbalken und Gegenbalken) an Führungsschlitten 9, die quer zur Folienlaufrichtung an Führungen 10 gleiten und in dieser Richtung mittels Zugstangen 11, Kipphebel 12, Zugstange 13 und Federkörper 14 von einem Exzenter 15 her angetrieben sind. Der Exzenter 15 wird über die Getrieberäder 20, 21, auf die weiter unten eingegangen wird, von dem Motor 22 angetrieben, dessen Geschwindigkeit von dem Regler 7 bestimmt ist. Die Antriebsgeschwindigkeit ist während der Schweißperiode im wesentlichen konstant. Die Führungen 10 und Mitnehmerstangen 16 sind mit einem horizontal verschiebbaren Schlitten 17 verbunden, mittels dessen die Schweißwerkzeuge parallel zur Folienlaufrichtung hin und her verschoben werden können. Dazu dient die Zugstange 18, die von dem Exzenter 19 angetrieben ist. Dieser wird wiederum über das Rad 20 von dem Motor 22 angetrieben.

Die Räder 21, 22 sind elliptisch ausgebildet und im dargestellten Beispiel zentrisch angeordnet; sie könnten auch exzentrisch angeordnet sein. Die Räder 20, 21 hat man sich im dargestellten Beispiel als miteinander kämmende Zahnräder vorzustellen; sie könnten selbstverständlich auch durch eine Kette, einen Riemen oder dgl. miteinander verbunden sein. Während das Rad 20 in der Schweißperiode mit konstanter Geschwindigkeit angetrieben wird, so daß auch der Exzenter 19 konstante Drehgeschwindigkeit aufweist, wirkt sich die Unrundheit der Räder 20, 21 auf den Exzenter 15 aus, der periodisch mit geringerer und höherer Umdrehungsgeschwindigkeit umläuft, und zwar ist seine Umdrehungsgeschwindigkeit dann herabgesetzt (dargestellter Zustand), wenn die Schweißwerkzeuge zusammengefahren sind. Es wird dadurch eine längere Schweißzeit zur Verfügung gestellt.

**Patentansprüche**

1. Vorrichtung zum Querschweißen einer laufenden Folienbahn mit einer Fördereinrichtung für die Folie und einem in Laufrichtung dahinter/davor vorgesehenen Querschweißwerkzeug, das mit einem Gleichlauffehler im Verhältnis zur Folienbewegung angetrieben ist, dadurch gekennzeichnet, daß jeder vom Schweißwerkzeug zurückgelegte Teilweg (C) innerhalb des Schweißwegs (S, S') geringer/größer als die zugeordnete Folienbewegungsstrecke (A) ist und daß die Folie währenddessen hinter/vor der Schweißstelle im wesentlichen längsspannungsfrei gehalten ist.

2. Vorrichtung nach Anspruch 1, dadurch gekennzeichnet, daß das Schweißwerkzeug mittels eines Kurbeltriebs angetrieben ist.

3. Vorrichtung nach Anspruch 2, dadurch gekennzeichnet, daß der Schweißweg des Werkzeugs einen Bogen von nicht mehr als 120° des Kurbelumlaufs einnimmt.

4. Vorrichtung nach Anspruch 3, dadurch gekennzeichnet, daß der dem Schweißweg des Werkzeugs zugeordnete Bogen des Kurbelumlaufs etwa gleichen Abstand von den Totpunkten aufweist.

5. Vorrichtung nach einem der Ansprüche 1 bis 4, bei der die Bewegungen des Schweiß- bzw. Gegenwerkzeugs (8) parallel zur Folienlaufbahn und quer dazu von einem und demselben Antrieb (22) über Kurbeltriebe (15, 19) und Getriebeverbindung (20, 21) abgeleitet sind, dadurch gekennzeichnet, daß die Getriebeverbindung unrunde Getrieberäder (20, 21) enthält.

6. Vorrichtung nach Anspruch 5, dadurch gekennzeichnet, daß die unrunden Getrieberäder (20, 21) nur in der Getriebeverbindung enthalten sind, die zu der Werkzeugbewegung quer zur Folienlaufrichtung führt.

7. Vorrichtung nach Anspruch 6, dadurch gekennzeichnet, daß die Anordnung der unrunden Getrieberäder (20, 21) so gewählt ist, daß die Werkzeuggeschwindigkeit quer zur Folienlaufrichtung in demjenigen Bereich, in welchem sich die Werkzeuge in Kontakt mit der Bahn befinden, verlangsamt ist.

Fig.1

Fig.2